# EUROPÄISCHE PATENTSCHRIFT

(11) **EP 2 361 752 B1**
(45) Veröffentlichungstag und Bekanntmachung des Hinweises auf die Patenterteilung: **08.04.2015**
(21) Anmeldenummer: 10001871.2
(22) Anmeldetag: 24.02.2010
(51) Int. Cl.: B29C 70/08, B29C 70/22, B29C 70/32, F03D 1/06, B29C 53/58, B29C 70/86, B29C 53/60, B29L 31/08, B29D 99/00

(54) **Faserverbundbauteil und Verfahren zur Herstellung desselben**
Fibre compound component and method for manufacturing the same
Composant en composite de fibre et son procédé de fabrication

(43) Veröffentlichungstag der Anmeldung: 31.08.2011
(73) Patentinhaber: BARD Holding GmbH, 26725 Emden (DE)
(72) Erfinder: Schultes, Klaus, 26607 Aurich (DE)
(74) Vertreter: Manasse, Uwe

(56) Entgegenhaltungen:
- DE-A1-102008 045 601
- US-A- 4 247 258
- US-A- 4 273 601
- US-A- 4 381 960

## Beschreibung

Die vorliegende Erfindung betrifft ein Faserverbundbauteil aus gewickeltem kunstharzgetränktem Fasermaterial und ein Verfahren zur Herstellung desselben.

Das Dokument US 4273601 offenbart die Merkmale des Oberbegriffs der Ansprüche 1 und 7.

Der vorliegenden Erfindung liegt die Aufgabe zugrunde, ein zumindest im wesentlichen gewickeltes Faserverbundbauteil mit einer in Umfangs- und Längsrichtung desselben angepassten Steifigkeits- und Materialverteilung bereitzustellen.

Erfindungsgemäß wird diese Aufgabe gelöst durch ein Faserverbundbauteil gemäß Anspruch 1.

Des weiteren wird diese Aufgabe gelöst durch ein Verfahren zur Herstellung eines Faserverbundbauteils gemäß Anspruch 7.

Bei dem Faserverbundbauteil ist das Fasermaterial der ersten Fasermateriallage günstigerweise unter einem Winkel im Bereich von 0° bis ca. 10° zur Längsrichtung des Faserverbundbauteils orientiert. Diese Lage wird mit geringer Steigung, vorzugsweise überlappend, gewickelt.

Alternativ oder zusätzlich kann das Fasermaterial der zweiten Fasermateriallage unter einem Winkel von ca. ±45° oder ca. ±90° zur Längsrichtung des Faserverbundbauteils kreuzförmig gewickelt sein. Es handelt sich dabei um bevorzugte Werte für den Winkel. Grundsätzlich kann der Winkel einen beliebigen Wert annehmen.

Gemäß einer besonderen Ausführungsform der Erfindung liegt eine dritte Fasermateriallage auf der ersten oder zweiten Fasermateriallage auf, in der Fasermaterial analog zu demjenigen der ersten Fasermateriallage beschaffen und gewickelt ist. Analog soll dabei nicht unbedingt bedeuten, dass das Fasermaterial der dritten Fasermateriallage identisch beschaffen und gewickelt ist.

Gemäß einer weiteren besonderen Ausführungsform der Erfindung liegt mindestens eine weitere Fasermateriallage auf der ersten, zweiten oder dritten Fasermateriallage mit darauf aufgebrachter mindestens einer lokaler Verstärkung auf, in der das Fasermaterial analog zu demjenigen der zweiten Fasermateriallage beschaffen und gewickelt ist. Hier soll ebenfalls analog nicht unbedingt bedeuten, dass das Fasermaterial der weiteren Fasermateriallage bzw. die Fasermaterialien der weiteren Fasermateriallagen identisch beschaffen und gewickelt ist.

Insbesondere kann vorgesehen sein, dass das Faserverbundbauteil ein Blattanschluss für ein Rotorblatt einer Windenergieanlage ist.

Bei dem erfindungsgemäßen Verfahren wird das Fasermaterial der ersten Fasermateriallage vorzugsweise unter einem Winkel im Bereich von 0° bis ca. 10° zur Längsrichtung des Faserverbundbauteils, vorzugsweise überlappend, gewickelt.

Alternativ oder zusätzlich kann vorgesehen sein, dass das Fasermaterial der zweiten Fasermateriallage unter einem Winkel von ca. ±45° oder ca. ±90° zur Längsrichtung des Faserverbundbauteils kreuzförmig gewickelt wird. Es handelt sich dabei um bevorzugte Werte für den Winkel. Grundsätzlich kann der Winkel einen beliebigen Wert annehmen.

Gemäß einer besonderen Ausführungsform der Erfindung ist die Lagendicke der dritten Fasermateriallage in Umfangsrichtung des Faserverbundbauteils zu-mindest nahezu konstant und variiert in Längsrichtung des Faserverbundbauteils.

Eine weitere besondere Ausführungsform der Erfindung des Verfahrens umfasst ferner: Wickeln mindestens einer weiteren Fasermateriallage auf die erste oder zweite Fasermateriallage mit darauf aufgebrachter mindestens einer lokaler Verstärkung, wobei das Fasermaterial ein Roving ist und derart gewickelt wird, dass die Lagendicke der Fasermateriallage in Umfangs- und Längsrichtung des Faserverbundbauteils zumindest nahezu konstant ist.

Wiederum eine weitere besondere Ausführungsform des Verfahrens umfasst ferner: Wickeln mindestens einer weiteren Fasermateriallage auf die dritte Fasermateriallage mit darauf aufgebrachter mindestens einer lokaler Verstärkung, wobei das Fasermaterial ein Roving ist und derart gewickelt wird, dass die Lagendicke der Fasermateriallage in Umfangs- und Längsrichtung des Faserverbundbauteils zumindest nahezu konstant ist.

Schließlich ist das Faserverbundbauteil vorzugsweise ein Blattanschluss für ein Rotorblatt einer Windenergieanlage.

Der Erfindung liegt die überraschende Erkenntnis zugrunde, dass durch ein spezielles Wickelverfahren die Fertigung eines Faserverbundbauteils mit einer in Umfangs- und Längsrichtung des Faserverbundbauteils angepassten Steifigkeits- und Materialverteilung möglich ist. Insbesondere lässt sich damit ein Faserverbundbauteil im Wickelverfahren herstellen, das auf einer Seite einen vorzugsweise rotationssymmetrischen Verbindungsbereich (Lager oder Flansch, bei dem die Lasteinleitung über den Umfang verteilt ist), wobei der Verbindungsbereich durch nachträgliches Bearbeiten, wie zum Beispiel Bohren etc., erstellt bzw. fertiggestellt werden kann, und auf der anderen Seite einen Bereich mit konzentrierten Krafteinleitungsbereichen aufweist, die nicht gleichförmig über den Umfang verteilt sind, und über lokale Verbindungselemente, wie zum Beispiel Schrauben, Bolzen etc., oder Überklebungen in Bereichen, die in erster Näherung parallel zur Bauteilachse sind, verlaufen. Mit anderen Worten kann ein Übergang von besagtem Verbindungsbereich zu besagtem Bereich mit konzentrierten Krafeinleitungsbereichen hergestellt werden. Der Bereich mit konzentrierten Krafteinleitungsbereichen kann rotationssymmetrisch oder an die Erfordernisse eines sich daran anschließenden Bauteils ausgeführt werden, zum Beispiel elliptisch oder angenähert an eine Profilform oder Teile desselben.

Weitere Merkmale und Vorteile der Erfindung ergeben sich aus den beigefügten Ansprüchen und der nachfolgenden Beschreibung, in der Ausführungsbeispiele anhand der schematischen Zeichnungen im einzelnen erläutert sind, wobei
- Figuren 1 bis 3: Phasen eines Verfahrens gemäß einer besonderen Ausführungsform der vorliegenden Erfindung zeigen;
- Figur 4: eine perspektivische Ansicht eines Faserverbundbauteils gemäß einer besonderen Ausführungsform der Erfindung zeigt;
- Figur 5: eine perspektivische Ansicht eines Faserverbundbauteils gemäß einer weiteren besonderen Ausfiihrungsform der Erfindung in Verbindung mit Rotorblattkomponenten einer Windenergieanlage zeigt; und
- Figur 6: eine perspektivische Ansicht eines Faserverbundbauteils gemäß einer weiteren besonderen Ausführungsform der vorliegenden Erfindung zeigt.

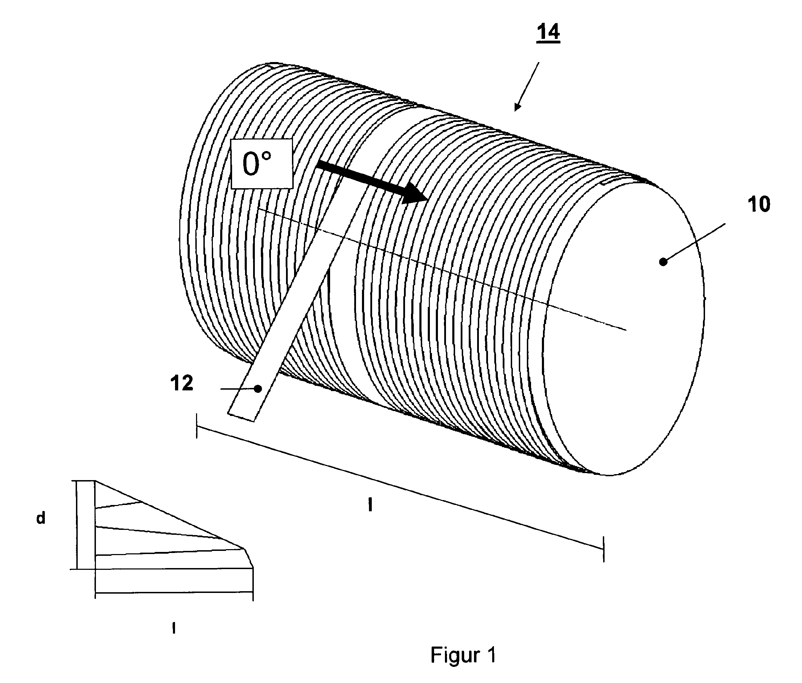

Figur 1 zeigt das Bewickeln eines Formwickelkörpers bzw. Formkerns 10 mit einem Fasermaterial, hier einem harzgetränkten Faserband 12. Derartige Faserbänder können als Fasergelege mit nahezu beliebiger Faserorientierung hergestellt werden. Im vorliegenden Fall besteht das Faserband aus einem Anteil Fasern in Bandlängsrichtung und einem weiteren Anteil nahezu quer zur Faserbandrichtung. Es sind zwei oder mehr Richtungen vorzugsweise symmetrisch zur Querrichtung des Faserbandes möglich. Der Faseranteil je Richtung orientiert sich an den Steifigkeits- und Festigkeitsanforderungen an das Faserverbundbauteil 14. Das Faserband 12 wird mit geringer Steigung, das heißt unter einem Winkel im Bereich von 0° bis 10° zur durch einen Pfeil gekennzeichneten Längsrichtung des Faserverbundbauteils auf den Formwickelkörper 10 gewickelt, wobei sich die Faserbänder überlappen. Die Kraftübertragung von einem Faserband 12 zum anderen erfolgt interlaminar über den Harz-FaserVerbund.

Durch betragsmäßiges Ändern und Richtungswechsel an Umkehrpunkten des Vorschubs beim Aufwickeln des Faserbandes 12 auf den Formwickelkörper 10 können nahezu beliebige stetige Bandstärkenverteilungen erzeugt werden. Der Formwickelkörper 10 wird also in Umfangsrichtung jeweils nahezu gleiche Belegung aufweisen, kann aber in Längsrichtung angepasst werden. Mit anderen Worten resultiert eine erste Fasermateriallage, deren Lagendicke in Umfangsrichtung des Faserverbundbauteils 14 zumindest nahezu konstant ist und in Längsrichtung des Faserverbundbauteils 14 variiert.

Während des vorangehend beschriebenen Wickelns können Faserbänder mit unterschiedlichen Orientierungen eingesetzt werden. Zudem ist in Figur 1 die Dicke d des Faserverbundbauteils über der Länge 1 desselben mit beispielhafter Darstellung von Umkehrpunkten gezeigt.

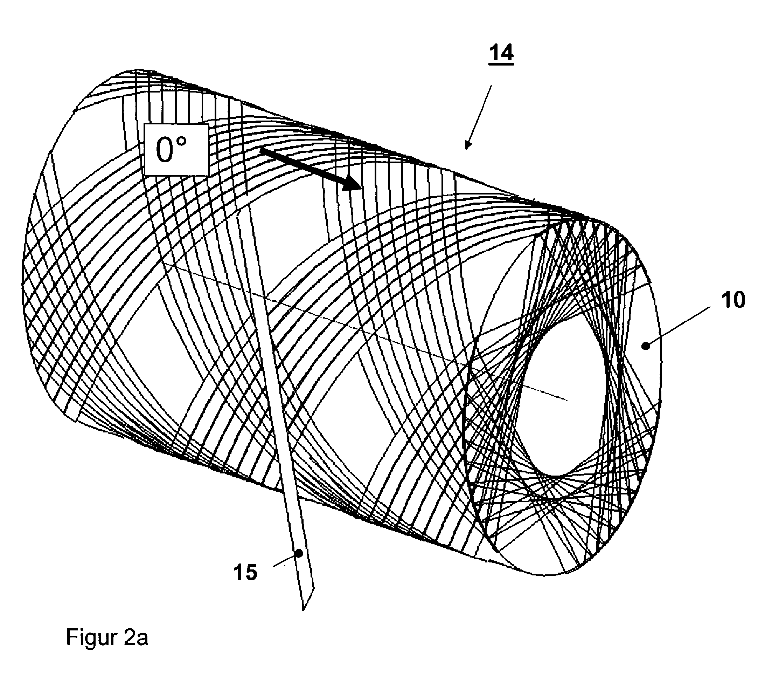

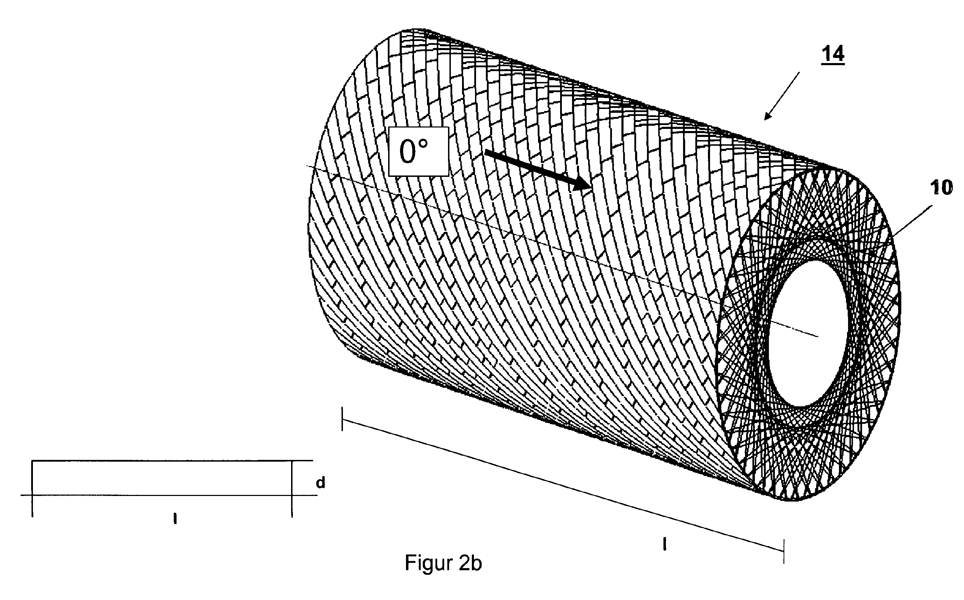

Wie Figur 2a gezeigt ist, wird/werden nach Aufbringen einer gewissen Lagendicke, die von der Faserverbundbauteilgeometrie und anderen Anforderungen abhängt, eine oder mehrere Wicklungen mit getränkten Fasersträngen, sogenannten Rovings 15 (Einzelfäden) oder einem Band aus mehreren parallel verlegten Rovings, aufgebracht, um eine ausreichende Verdichtung des Faserverbundbauteils zu erhalten. Diese Rovings 15 werden vorzugsweise in einem Winkel von ±45° (zur Stabilisierung des Lagenaufbaus) und 90° (zur Verdichtung) in einer zweiten Fasermateriallage gewickelt. Bei Wickelwinkeln bis ca. 60° ist eine Umkehr der Vorschubrichtung nur über die Stirnseiten ohne aufwendige Hilfsmittel möglich. Dieser Anteil der Belegung ergibt eine in Längs- und Umfangsrichtung homogene Belegung (siehe Figuren 2a und 2b). Mit anderen Worten resultiert eine in Umfangs- und Längsrichtung des Faserverbundbauteils zumindest nahezu konstante Lagendicke der zweiten Fasermateriallage (siehe auch die Darstellung der Dicke d der zweiten Fasermateriallage über die Länge 1 des Faserverbundmaterials).

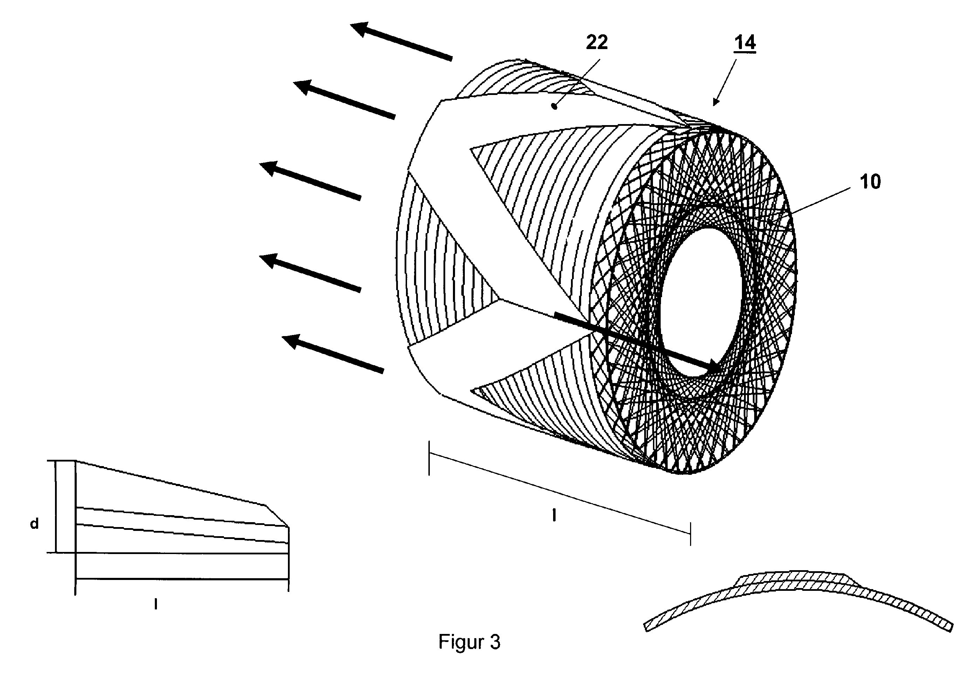

Danach kann nach Bedarf entweder mindestens eine weitere Fasermateriallage, wie in Figur 1 gezeigt, aufgebracht werden (nicht gezeigt) oder können gezielt in bestimmten Bereichen Verstärkungsbänder 22 zur Lastverteilung aufgebracht werden (siehe Figur 3). Diese Verstärkungsbänder 22 liegen in Richtung der gewünschten Lastverteilung und bestehen aus Fasern in Bandlängsrichtung. In Figur 3 rechts befindet sich der Bereich für spätere konzentrierte Krafteinleitung, zum Beispiel durch Klebung, Verbolzung etc. (konzentriert in Umfangsrichtung), während in Figur 3 links sich der spätere Verbindungs- bzw. Einspannbereich (verteilte Krafteinleitung in Umfangsrichtung) befindet. In Figur 3 ist unten links zudem die genannte Dicke d, das heißt aller aufgebrachten Fasermateriallagen, in Abhängigkeit von der Länge 1 des Faserverbundbauteils 14 gezeigt. In Längs- und Querrichtung sind zusätzliche lokale Verstärkungsbänder bzw. Verstärkungen vorhanden.

Nach Aufbringen der Verstärkungsbänder kann es sinnvoll sein, eine oder mehrere Fasermateriallage(n), wie in Figuren 2a und 2b gezeigt, zur Verdichtung aufzubringen (nicht gezeigt).

Anschließend kann/können je nach gewünschtem Lagenaufbau die in den Figuren 1 bis 3 gezeigten Verfahrensschritte ein- oder mehrfach, ganz oder teilweise wiederholt werden.

Am Ende wird der Formwickelkörper 10 entfernt, so dass das fertige Faserverbundbauteil resultiert.

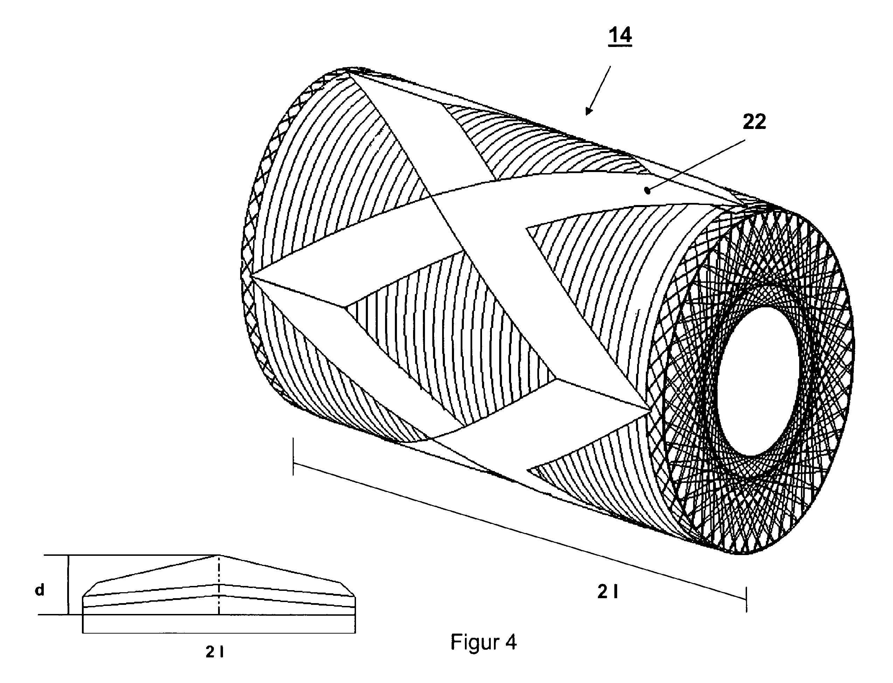

Figur 4 zeigt ein fertig gewickeltes Faserverbundbauteil 14 gemäß der vorliegenden Erfindung, das als "Doppelbauteil", daher Länge 21, ausgeführt ist und durch späteres mechanisches Trennen im mittleren Bereich in zwei Einzelbauteile aufgeteilt wird. Mit anderen Worten werden zwei Faserverbundbauteile gleichzeitig hergestellt, indem ein Formwickelkörper 10 mit vergrößerter Länge oder zwei gegeneinander gesetzte und entsprechend der Faserverbundbauteilanforderung gegeneinander verdrehte Kerne zunächst als ein "Doppelbauteil" hergestellt werden, die danach in der Mitte geteilt werden. Dies weist den Vorteil auf, dass weniger Materialverschnitt anfällt, da andernfalls mit Überstand gewickelt werden muss.

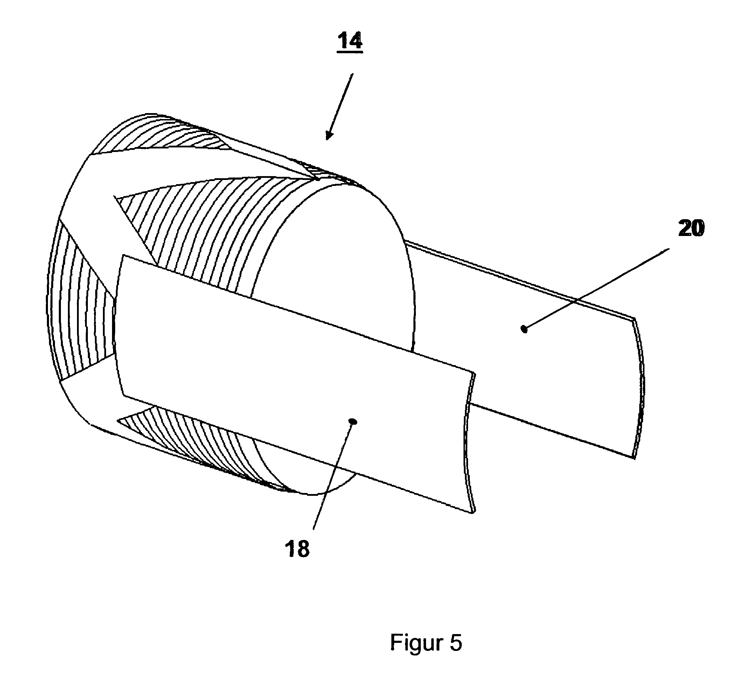

Figur 5 zeigt ein Faserverbundbauteil gemäß einer besonderen Ausführungsform der Erfindung, genauer gesagt einen Rotorblattanschluss 16 für ein Rotorblatt für eine Windenergieanlage mit weiteren Rotorblattkomponenten 18 und 20.

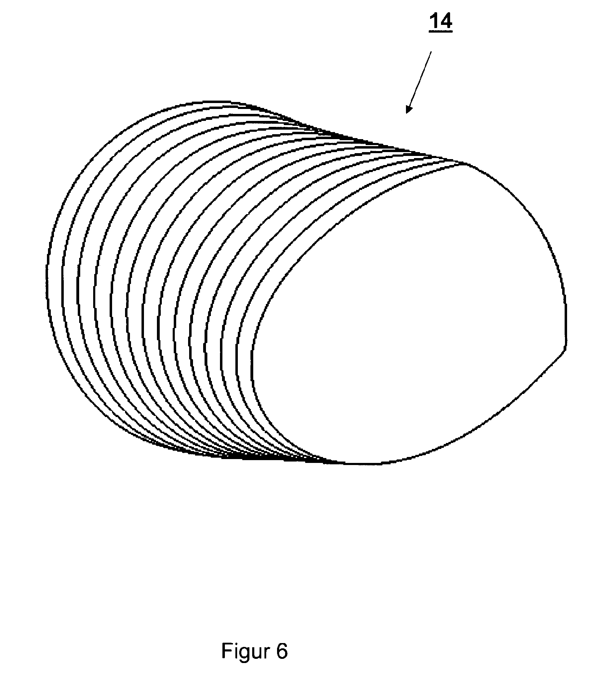

Schließlich ergibt sich aus Figur 6, dass das Faserverbundbauteil 14 gemäß einer besonderen Ausführungsform der vorliegenden Erfindung mit einem Verfahren gemäß einer besonderen Ausfiihrungsform der vorliegenden Erfindung auch nicht rotationssymmetrisch gefertigt werden kann.

Gemäß einer weiteren besonderen Ausführungsform der Erfindung kann vorgesehen sein, dass die in den Figuren 1 und 2 gezeigten Schritte nicht nacheinander, sondern ganz oder teilweise gleichzeitig (zum Beispiel durch zwei unabhängig gesteuerte Vorschubschlitten) durchgeführt werden.

Wie die obigen Ausführungen gezeigt haben, lässt sich zumindest gemäß besonderen Ausführungsformen des erfindungsgemäßen Verfahrens ein definierter Wandstärkenverlauf vom Flansch (Rotorblattanschluss) in Richtung Rotorblatt erzeugen.

Die in der vorstehenden Beschreibung, in den Zeichnungen sowie in den Ansprüchen offenbarten Merkmale der Erfindung können sowohl einzeln als auch in beliebigen Kombinationen für die Verwirklichung der Erfindung in ihren verschiedenen Ausführungsformen wesentlich sein.

### Bezugszeichenliste

- 10: Formwickelkörper bzw. Formkern
- 12: Faserband
- 14: Faserverbundbauteil
- 15: Roving
- 16: Rotorblattanschluss
- 18, 20: Rotorblattkomponenten
- 22: Verstärkungsbänder

- d: Dicke des Faserverbundbauteils oder der Fasermateriallage (Faserverbundlage)
- l: Länge des Faserverbundbauteils

## Patentansprüche

1. Faserverbundbauteil (14) aus gewickeltem kunstharzgetränktem Fasermaterial, wobei das Fasermaterial in mindestens zwei übereinander liegenden Fasermateriallagen angeordnet ist und in der nachfolgend ersten genannten Fasermateriallage das Fasermaterial ein Fasergelege, ein Fasergewebe oder eine Fasermatte ist und so gewickelt ist, dass deren Lagendicke in Umfangsrichtung des Faserverbundbauteils (14) zumindest nahezu konstant ist und in Längsrichtung des Faserverbundbauteils (14) variiert, in der darauf aufliegenden oder darunter liegenden, nachfolgend zweiten genannten Fasermateriallage das Fasermaterial ein Roving (15) ist und so gewickelt ist, dass deren Lagendicke in Umfangs- und Längsrichtung des Faserverbundbauteils (14) zumindest nahezu konstant ist, **dadurch gekennzeichnet, dass** auf der ersten oder zweiten oder einer dritten gewickelten Fasermateriallage in mindestens einem Bereich eine lokale Verstärkung zur Lastverteilung aufgebracht ist, wobei die Verstärkung ein Verstärkungsband (22) ist, das aus Fasern in seiner Längsrichtung besteht.

2. Faserverbundbauteil (14) nach Anspruch 1, **dadurch gekennzeichnet, dass** das Fasermaterial der ersten Fasermateriallage unter einem Winkel im Bereich von 0° bis ca. 10° zur Längsrichtung des Faserverbundbauteils (14) orientiert ist.

3. Faserverbundbauteil (14) nach Anspruch 1 oder 2, **dadurch gekennzeichnet, dass** das Fasermaterial der zweiten Fasermateriallage unter einem Winkel von ca. ± 45 ° oder ca. ± 90 ° zur Längsrichtung des Faserverbundbauteils (14) kreuzförmig gewickelt ist.

4. Faserverbundbauteil (14) nach einem der Ansprüche 1 bis 3, **dadurch gekennzeichnet, dass** die dritte Fasermateriallage auf der ersten oder zweiten Fasermateriallage aufliegt und in der das Fasermaterial analog zu demjenigen der ersten Fasermateriallage beschaffen und gewickelt ist.

5. Faserverbundbauteil (14) nach einem der vorangehenden Ansprüche, **dadurch gekennzeichnet, dass** mindestens eine weitere Fasermateriallage auf der ersten, zweiten oder dritten Fasermateriallage mit darauf aufgebrachter mindestens einer lokaler Verstärkung aufliegt, in der das Fasermaterial analog zu demjenigen der zweiten Fasermateriallage beschaffen und gewickelt ist.

6. Faserverbundbauteil (14) nach einem der vorangehenden Ansprüche, **dadurch gekennzeichnet, dass** es ein Blattanschluss für ein Rotorblatt einer Windenergieanlage ist.

7. Verfahren zur Herstellung eines Faserverbundbauteils (14) aus gewickeltem kunstharzgetränktem Fasermaterial, insbesondere nach einem der vorangehenden Ansprüche, umfassend die Schritte:
- Wickeln eines Fasermaterials, das ein Fasergelege, ein Fasergewebe oder eine Fasermatte ist, in einer ersten Fasermateriallage auf einen Formwickelkörper (10) derart, dass die Lagendicke der ersten Fasermateriallage in Umfangsrichtung des Faserverbundbauteils (14) zumindest nahezu konstant ist und in Längsrichtung des Faserverbundbauteils (14) variiert, und
- Wickeln eines Fasermaterials, das ein Roving (15) ist, in einer zweiten Fasermateriallage auf die erste Fasermateriallage derart, dass die Lagendicke der zweiten Fasermateriallage in Umfangs- und Längsrichtung des Faserverbundbauteils (14) zumindest nahezu konstant ist,
- oder umgekehrtes Anordnen der ersten und zweiten Fasermateriallagen **dadurch gekennzeichnet, dass** auf der ersten oder zweiten oder einer dritten gewickelten Fasermateriallage in mindestens einem Bereich eine lokale Verstärkung zur Lastverteilung aufgebracht wird, wobei die Verstärkung ein Verstärkungsband (22) ist, das aus Fasern in seiner Längsrichtung besteht.

8. Verfahren nach Anspruch 7, **dadurch gekennzeichnet, dass** das Fasermaterial der ersten Fasermateriallage unter einem Winkel im Bereich von 0 ° bis ca. 10 ° zur Längsrichtung des Faserverbundbauteils (14), vorzugsweise überlappend, gewickelt wird.

9. Verfahren nach Anspruch 7 oder 8, **dadurch gekennzeichnet, dass** das Fasermaterial der zweiten Fasermateriallage unter einem Winkel von ca. ± 45 ° oder ca. ± 90 ° zur Längsrichtung des Faserverbundbauteils (14) kreuzförmig gewickelt wird.

10. Verfahren nach einem der Ansprüche 7 bis 9, **dadurch gekennzeichnet, dass** die Lagendicke der dritten Fasermateriallage in Umfangsrichtung des Faserverbundbauteils (14) zumindest nahezu konstant ist und in Längsrichtung des Faserverbundbauteils (14) variiert.

11. Verfahren nach einem der Ansprüche 7 bis 9, **dadurch gekennzeichnet, dass** es ferner umfasst:
- Wickeln mindestens einer weiteren Fasermateriallage auf die erste oder zweite Fasermateriallage mit darauf aufgebrachter mindestens einer lokaler Verstärkung, wobei das Fasermaterial ein Roving ist und derart gewickelt wird, dass die Lagendicke der Fasermateriallage in Umfangs- und Längsrichtung des Faserverbundbauteils (14) zumindest nahezu konstant ist.

12. Verfahren nach Anspruch 10, **dadurch gekennzeichnet, dass** es ferner umfasst:
- Wickeln mindestens einer weiteren Fasermateriallage auf die dritte Fasermateriallage mit darauf aufgebrachter mindestens einer lokaler Verstärkung, wobei das Fasermaterial ein Roving ist und derart gewickelt wird, dass die Lagendicke der Fasermateriallage in Umfangs- und Längsrichtung des Faserverbundbauteils (14) zumindest nahezu konstant ist.

13. Verfahren nach einem der Ansprüche 7 bis 12, **dadurch gekennzeichnet, dass** das Faserverbundbauteil (14) ein Blattanschluss für ein Rotorblatt einer Windenergieanlage ist.

## Claims

1. Fibre-composite component (14) from wound fibrous material impregnated with artificial resin, wherein the fibrous material is disposed in at least two layers of fibrous material lying on top of one another, and in the fibrous material layer which henceforth is referred to as the first fibrous material layer the fibrous material is a cross-laid fibre structure, a woven fibre fabric, or a fibre mat, and is wound such that the layer thickness thereof in the circumferential direction of the fibre-composite component (14) is at least almost constant and varies in the longitudinal direction of the fibre-composite component (14), and in the fibrous material layer which lies thereupon or lies therebelow and which henceforth is referred to as the second fibrous material layer the fibrous material is a roving (15) and is wound such that the layer thickness thereof in the circumferential and longitudinal directions of the fibre-composite component (14) is at least almost constant, **characterized in that** on the first, or second, or a third wound fibrous material layer a localized reinforcement for the distribution of force is applied in at least one region, wherein the reinforcement is a reinforcement tape (22) which is composed of fibres in its longitudinal direction.

2. Fibre-composite component (14) according to Claim 1, **characterized in that** the fibrous material of the first fibrous material layer is oriented at an angle in the range of 0° to approx. 10° in relation to the longitudinal direction of the fibre-composite component (14).

3. Fibre-composite component (14) according to Claim 1 or 2, **characterized in that** the fibrous material of the second fibrous material layer is cross-wound at an angle of approx. ± 45° or approx. ± 90° in relation to the longitudinal direction of the fibre-composite component (14).

4. Fibre-composite component (14) according to one of Claims 1 to 3, **characterized in that** the third fibrous material layer lies on top of the first or second fibrous material layer, and the fibrous material therein is configured and wound in an analogous manner to that of the first fibrous material layer.

5. Fibre-composite component (14) according to one of the preceding claims, **characterized in that** at least one further fibrous material layer lies on top of the first, second, or third fibrous material layer, having at least one localized reinforcement applied thereon, the fibrous material therein being configured and wound in an analogous manner to that of the second fibrous material layer.

6. Fibre-composite component (14) according to one of the preceding claims, **characterized in that** said fibre-composite component is a blade connector for a rotor blade of a wind-energy plant.

7. Method for the manufacture of a fibre-composite component (14) from wound fibrous material impregnated with artificial resin, in particular according to one of the preceding claims, comprising the following steps:
- winding a fibrous material which is a cross-laid fibre structure, a woven fibre fabric, or a fibre mat, in a first fibrous material layer onto a shaped winding body (10) in such a manner that the layer thickness of the first fibrous material layer in the circumferential direction of the fibre-composite component (14) is at least almost constant and varies in the longitudinal direction of the fibre-composite component (14), and
- winding a fibrous material which is a roving (15) in a second fibrous material layer onto the first fibrous material layer in such a manner that the layer thickness of the second fibrous material layer in the circumferential and longitudinal direction of the fibre-composite component (14) is at least almost constant, or
- arranging the first and second fibrous material layers in the reverse order,
**characterized in that** on the first, or second, or a third wound fibrous material layer a localized reinforcement for the distribution of force is applied in at least one region, wherein the reinforcement is a reinforcement tape (22) which is composed of fibres in its longitudinal direction.

8. Method according to Claim 7, **characterized in that** the fibrous material of the first fibrous material layer is wound, preferably in an overlapping manner, at an angle in the range of 0° to approx. 10° in relation to the longitudinal direction of the fibre-composite component (14).

9. Method according to Claim 7 or 8, **characterized in that** the fibrous material of the second fibrous material layer is cross-wound at an angle of approx. ± 45° or approx. ± 90° in relation to the longitudinal direction of the fibre-composite component (14).

10. Method according to one of Claims 7 to 9, **characterized in that** the layer thickness of the third fibrous material layer in the circumferential direction of the fibre-composite component (14) is at least almost constant and varies in the longitudinal direction of the fibre-composite component (14).

11. Method according to one of Claims 7 to 9, **characterized in that** said method furthermore comprises:
- winding at least one further fibrous material layer onto the first or second fibrous material layer having at least one localized reinforcement applied thereon, wherein the fibrous material is a roving and is wound in such a manner that the layer thickness of the fibrous material layer in the circumferential and longitudinal direction of the fibre-composite component (14) is at least almost constant.

12. Method according to Claim 10, **characterized in that** said method furthermore comprises:
- winding at least one further fibrous material layer onto the third fibrous material layer having at least one localized reinforcement applied thereon, wherein the fibrous material is a roving and is wound in such a manner that the layer thickness of the fibrous material layer in the circumferential and longitudinal direction of the fibre-composite component (14) is at least almost constant.

13. Method according to one of Claims 7 to 12, **characterized in that** the fibre-composite component (14) is a blade connector for a rotor blade of a wind-energy plant.

## Revendications

1. Composant composite fibreux (14) en matériau fibreux enroulé et imprégné de résine, le matériau fibreux étant disposé dans au moins deux couches de matériau fibreux superposées et, dans la première couche de matériau fibreux mentionnée dans la suite, le matériau fibreux étant un non-tissé fibreux, un tissu fibreux ou une natte fibreuse et étant enroulé de façon à ce que son épaisseur de couche soit au moins presque constante dans la direction de la circonférence du composant composite fibreux (14) et variable dans la direction longitudinale du composant composite fibreux (14), dans la deuxième couche de matériau fibreux, mentionnée dans la suite, située au-dessus ou en dessous, le matériau fibreux étant un roving (15) et étant enroulé de façon à ce que son épaisseur de couche soit au moins presque constante dans la direction de la circonférence du composant composite fibreux (14), **caractérisé en ce que**, sur la première ou la deuxième ou une troisième couche de matériau fibreux enroulé, dans au moins une zone, un renforcement local est réalisé pour la répartition des charges, ce renforcement étant une bande de renfort (22) constituée de fibres dans sa direction longitudinale.

2. Composant composite fibreux (14) selon la revendication 1, **caractérisé en ce que** le matériau fibreux de la première couche de matériau fibreux est orienté avec un angle de l'ordre de 0° à environ 10° par rapport à la direction longitudinale du composant composite fibreux (14).

3. Composant composite fibreux (14) selon la revendication 1 ou 2, **caractérisé en ce que** le matériau fibreux de la deuxième couche de matériau fibreux est enroulé de manière croisée avec un angle d'environ ± 45° ou d'environ ± 90° par rapport à la direction longitudinale du composant composite fibreux (14).

4. Composant composite fibreux (14) selon l'une des revendications 1 à 3, **caractérisé en ce que** la troisième couche de matériau fibreux repose sur la première ou la deuxième couche de matériau fibreux et dans laquelle le matériau fibreux est réalisé et enroulé de manière analogue à celui de la première couche de matériau fibreux.

5. Composant composite fibreux (14) selon l'une des revendications précédentes, **caractérisé en ce qu'**au moins une couche de matériau fibreux supplémentaire repose sur la première, la deuxième ou la troisième couche de matériau fibreux avec au moins un renforcement local réalisé au-dessus, dans lequel le matériau fibreux est réalisé et enroulé de manière analogue à celui de la deuxième couche de matériau fibreux.

6. Composant composite fibreux (14) selon l'une des revendications précédentes, **caractérisé en ce qu'**il s'agit d'un raccordement de pale pour une pale de rotor d'une éolienne.

7. Procédé de fabrication d'un composant composite fibreux (14) en matériau fibreux enroulé et imprégné de résine, plus particulièrement selon l'une des revendications précédentes, comprenant les étapes suivantes :
- enroulement d'un matériau fibreux, qui est un non-tissé fibreux, un tissu fibreux ou une natte fibreuse, dans une première couche de matériau fibreux sur une forme d'enroulement (10) de façon à ce que l'épaisseur de couche de la première couche de matériau fibreux est presque constante dans la direction de la circonférence du composant composite fibreux (14) et varie dans la direction longitudinale du composant composite fibreux (14), et
- enroulement d'un matériau fibreux, qui est un roving (15), dans une deuxième couche de matériau fibreux sur la première couche de matériau fibreux, de façon à ce que l'épaisseur de couche de la deuxième couche de matériau fibreux est au moins presque constante dans la direction de la circonférence et la direction longitudinale du composant composite fibreux (14),
- ou disposition inversée de la première et de la deuxième couche de matériau fibreux,
**caractérisé en ce que**, sur la première ou la deuxième ou une troisième couche de matériau fibreux, est réalisé, sur au moins une zone, un renforcement local pour la répartition des charges, le renforcement étant une bande de renfort (22) constituée de fibres dans sa direction longitudinale.

8. Procédé selon la revendication 7, **caractérisé en ce que** le matériau fibreux de la première couche de matériau fibreux est enroulé avec un angle de l'ordre de 0° à environ 10° par rapport à la direction longitudinale du composant composite fibreux (14), de préférence de manière superposée.

9. Procédé selon la revendication 7, **caractérisé en ce que** le matériau fibreux de la deuxième couche de matériau fibreux est enroulé de manière croisée avec un angle d'environ ± 45° ou d'environ ± 90° par rapport à la direction longitudinale du composant composite fibreux (14).

10. Procédé selon l'une des revendications 7 à 9, **caractérisé en ce que** l'épaisseur de couche de la troisième couche de matériau fibreux est au moins presque constante dans la direction de la circonférence du composant composite fibreux (14) et varie dans la direction longitudinale du composant composite fibreux (14).

11. Procédé selon l'une des revendications 7 à 9, **caractérisé en ce qu'**il comprend en outre :
- l'enroulement d'au moins une couche de matériau fibreux supplémentaire sur la première ou la deuxième couche de matériau fibreux avec l'application d'au moins un renforcement local, le matériau fibreux étant un roving et étant enroulé de façon à ce que l'épaisseur de couche de la couche de matériau fibreux soit au moins presque constante dans la direction de la circonférence et dans la direction longitudinale du composant composite fibreux (14).

12. Procédé selon la revendication 10, **caractérisé en ce qu'**il comprend en outre :
- l'enroulement d'au moins une couche de matériau fibreux supplémentaire sur la troisième couche de matériau fibreux avec l'application d'au moins un renforcement local, le matériau fibreux étant un roving et étant enroulé de façon à ce que l'épaisseur de couche de la couche de matériau fibreux soit au moins presque constante dans la direction de la circonférence et dans la direction longitudinale du composant composite fibreux (14).

13. Procédé selon l'une des revendications 7 à 12, **caractérisé en ce que** le composant composite fibreux (14) est un raccordement de pale ou une pale de rotor d'une éolienne.
